# EUROPÄISCHE PATENTSCHRIFT

(11) **EP 3 077 882 B1**
(45) Veröffentlichungstag und Bekanntmachung des Hinweises auf die Patenterteilung: **07.06.2017**
(21) Anmeldenummer: 15775610.7
(22) Anmeldetag: 05.07.2015
(51) Int. Cl.: G05D 1/10, B08B 3/02, F24J 2/46, G01B 21/20, G01S 5/00, B08B 1/00

(54) **VERFAHREN ZUR STEUERUNG EINES FLUGKOERPERS ZUR REINIGUNG VON OBERFLÄCHEN**
METHOD OF CONTROLLING OF A FLYING ROBOT FOR CLEANING SURFACES
MÉTHODE DE RÉGULATION D'UN ROBOT VOLANT POUR NETTOYAGE DES SURFACES

(30) Priorität: 05.07.2014 DE 102014009903
(43) Veröffentlichungstag der Anmeldung: 12.10.2016
(73) Patentinhaber: AZAIZ, Ridha, London WC2H 9JQ (GB)
(72) Erfinder: AZAIZ, Ridha, London WC2H 9JQ (GB)
(86) Internationale Anmeldenummer: PCT/DE2015/000335
(87) Internationale Veröffentlichungsnummer: WO 2016/004914

(56) Entgegenhaltungen:
- WO-A2-2013/076711
- DE-A1-102007 033 485
- DE-A1-102009 048 778
- DE-A1-102012 025 499
- KR-A- 20030 025 662
- US-A1- 2011 204 188
- US-B1- 6 419 190

## Beschreibung

Es ist bekannt, Flugkoerper, etwa Drohnen fuer Packetlieferungen zu verwenden, wobei diese aus mehreren Gruenden noch nicht praxistauglich sind.

Der Weg der Drohne muss unter hohen Toleranzen der Flugbahn, welche horizontal als auch vertikal auftreten, vorprogrammiert werden.

Weiterhin muss die Flugbahn stark veraendert werden koennen, da diese weitaus groesseren und chaotisch auftretenden Hindernissen angepasst werden muss als etwa die Flugbahn auf einem Solarkraftwerk oder Hausdach.

Sicherheitstechnisch ist die Anwendung fuer Packetlieferungen weiterhin sicherheitstechnisch kritisch da sie fuer gewohenlch in einem Gebiet mit starkem Personenverkehr vorkommt.

Der im Patentanspruch 1 angegebenen Erfindung liegt das Problem zugrunde, Oberflaechen, etwa Solarkraftwerke, Glasfassaden oder Daecher, strukturiert mit hohem Automatisierungsgrad unter geringem Energieaufwand von Verschmutzungen zu Reinigen und ggf. eine weitere Bearbeitung zu ermöglichen.

Dieses Problem wird durch der in dem Patentanspruch 1 aufgeführten Merkmale (ggf. Wörtliche Zitierung der Merkmale) gelöst.

Die Weiterbildung nach Patentanspruch 1 ermöglicht, dass das zu reinigende Objekt erfasst werden kann und ein Flugkoerper unter geringem energetischen Aufwand sich gegenueber diesem orientieren und / oder ausrichten kann.

Die Erfassung von geometrischen, etwa dreidimensionalen, Informationen ermoeglicht das Ausrichten in horizontaler als auch vertikaler Ebene, also translatorisch, sowie rotatorisch gegenueber dem Objekt.

Das Erkennen von Objekten, Kanten oder deren Umrissen sowie der Erfassung des Abstands zu diesen beguenstigt das energiearme, da geordnete, Auslegen von Flugbahnen.

Insbesondere die Erfassung der Hoehe bzw. der Topologie der Oberflaeche ermoeglicht es die Hoehe des Flugkoerpers und dessen Reinigungsapparatur gemaess der Oberlfaeche nachzufueheren oder auszurichten.

Ein Flugkoerper kann entsprechend der vom Sensorsystem erfassten Informationen angesteuert und ausgerichtet werden.

So koennen etwa an den Enden des Flugkoerpers Sensoren angebracht sein, welche jeweils eine Abstandsmessung vornehmen um den Flugkoerper parallel zu einer Kante auszurichten.

Um Kosten und und Gewicht zu sparen koennen einfache Sensoren, beispielsweise Sensoren zur Abstandsmessung, verwendet werden. Diese koennen in einer Definierten Position, etwa unter einem besonderen Winkel oder Abstand, gegenueber dem Flugkoerper oder der Reinigungsapparatur angebracht sein.

In Verbindung einer gewaehlten Anordnung des Sensorsystems sowie dem Positionieren des Flugkoerpers koennen die geometischen Eigenschaften eines Objekts erfasst werden. Dies ermoeglicht die verwendung einfacher Sensorsysteme.

Stellt das Sensorsystem mehr Informationen auf einmal bereit, beispielsweise kombiniert durch eine Kamera, so muss der Flugkoerper ggf. weniger positioniert werden da die naehere Umgebung schneller bzw. umfangreicher erfasst werden kann.

Die Reinigung der Oberflaeche kann durch Effektoren am Flugkoerper direkt, bespielsweise eine Buerste und / oder durch den mit einem Rotor verursachten Luftstrom, und / oder ueber einen Befestigungsadapter mit dem Flugkoerper verbundene Effektoren erfolgen. Eine solche Reinigungsapparatur kann beweglich und / oder fest gegenueber dem Flugkoerper verbunden sein.

Eine vorteilhafte Ausgestaltung der Erfindung ist im Patentanspruch 2 angegeben. Die Weiterbildung nach Patentanspruch 2 ermöglicht es, die Position des Flugkoerpers, die Position eines Objekts und die Relativposition zwischen Flugkoerper und Objekt Anhand von Sensorinformationen und / oder Berechnungen zu erfassen wodurch ggf. weitere Verfahrensschitte ermoeglicht werden.

In Verbindung einer gewaehlten Anordnung des Sensorsystems sowie dem Positionieren des Flugkoerpers koennen die geometischen kann die relative Positon innerhalb besonderer Routinen oder Berechnungsverfahren im Verfahren zur Steuerung von Flugkoerpem erfasst werden.

Fuer ein Sensorsystem welches Tiefeninformationen oder Kanten und Umrisse erkennen gibt es dabei beispielsweise zwei unmittelbare Anwendungsfaelle.

Zum einen kann das Sensorsystem mit der Flugsteuerung des Flugkoerpers verbunden werden um die Flugbahn und deren Verlauf bzw. die unmittelbare Navigation des Flugkoerpers, etwa die Ausrichtung, zu beinflussen.

Die Position des Flugkoerpers und der angebrachten Reinigungsapperatur, beispielsweise die Flughoehe, kann entsprechend der Sensorinformationen fuer eine kontinuierliche Wirkung des Effektors auf der Oberflaeche eingestellt und / oder geregelt werden.

Eine ideale Ausrichtung kann das parallele Ausrichten oder Nachfuehren der Reinigungsapparatur bzw. dessen Wirkflaeche zur Oberlfaeche des Objekts darstellen.

Die geeignete Position des Flugkoerpers, etwa die Flughoehe und damit der Abstand zur Oberflaeche eines zu reinigenden Objekts, kann dabei je nach angebrachter Reinigungsapperatur und dessen Ausgestaltung varriieren.

Die geeignete Position kann jedoch so gewaehlt werden als dass durch eine gegenueber dem Flugkoerper bewegliche Anordung der Reinigungsapperatur Ungenauigkeiten des Flugkoerpers, beispielsweise in seiner Flugroute, oder Ungenauigkeiten der Oberflaeche eines Objekts, ausgeglichen werden koennen.

Dadurch soll der Flugkoerper nicht auf einer Flugroute fliegen, innerhalb derer die bewegliche Anordnung moegliche Ungennauigkeiten nicht mehr ausgleichen kann.

Zum Anderen kann die Reinigungsapparatur unabhaengig von der Flugsteuerung angesteuert werden. Beispielsweise kann ein Aktuator der Reinigungsapparatur angesteuert werden um beim Verlassen der zu reinigenden Oberflaeche ggf. Bewegungen eines Effektors einzustellen und / oder beim Landen eine Reinigungsapparatur in einer Ausrichtung entgegen dem Boden einzuziehen, sodass die Wirkflaeche eines Effektors an der Reinigungsapparatur von dem Boden weg zeigt und diese nicht zusaetzlich verschmutzt oder diese das Landen behindert. Insgesamt kann dadurch das Fuegen der Reinigungsapparatur mit unterschiedlichen Flugkoerpern beguenstigt werden.

Die Ausrichtung und / oder Positionierung des Flugkoerpers ist auch von Bedeutung, wenn die Effektoren nicht unbestimmt auf die Oberflaeche eines Objektes einwirken sollen. Wird beispielsweise bei der Anwendung auf einem Solarkraftwerk in der Wueste der Luftstrom eines Flugkoerpers zum entfernen von Sand verwendet, so ist es sinnvoll nach ueberfliegen der Solarpanele oder Spiegel, und damit nach bzw. zwischen dem Reinigungsvorgang, einen groesseren Abstand zu den Panelen einzunehmen um nicht umliegenden Staub aufzuwirbeln wodurch die Oberflaeche wieder verschmutzt werden wuerde.

Ein Sensorsystem kann beispielsweise ein optisches System wie Infrarot, Laser oder Kamera umfassen, jedoch auch akustisch, etwa mit Ultraschall, per Radar und / oder taktil funktionieren. Flugkoerper, auch Drohnen genannt, besitzen weitere Sensoren um die Navigation und Flugsicherheit zu ermoeglichen oder zu unterstuetzen welche um die genannten Sensorsysteme erweitert werden koennen.

Mit einem Sensor zur Kraftaufnahme, etwa Dehnmessstreifen, kann die Krafteinleitung an der Reinigungapparatur, beispielsweise an der Oberflaeche, kontolliert oder eine Fehlfunktion, etwa ein Verkanten der Reinigungsapparatur, detektiert werden. Anhand von Sensoren zur Erfassung von Wetterdaten, etwa Wind, Luftfreuchte, Zeit oder Temperatur, oder informationstechnisch aus der Ferne bezogenen Sensordaten oder Vorhersagen zu klimatischen Bedingungen, kann weiterhin der Betrieb angehalten oder gestartet werden.

Eine vorteilhafte Ausgestaltung der Erfindung ist im Patentanspruch 3 angegeben. Die Weiterbildung nach Patentanspruch 3 ermöglicht es, dass sich der Flugkoerper der zur Reinigenden Oberflaeche eines Objekts zweckmaessig annaehert.

Die Routine ordnet die Bewegungen des Flugkoerpers in einer Reihenfolge, in welcher dieser nicht ungewollt mit dem zu reinigenden Objekt kollidiert und Flugbahnen eingehalten werden.

So kann sich der Flugkoerper zunaechst einem Punkt, auch Wegpunkt genannt, annaehern.
Diese Punkte sind vorprogrammiert und ergeben durch unterschiedliche Priorisierung ein Muster.

Ein Punkt umfasst eine horizontale als auch vertikale Positionsangabe sowie die Ausrichtung und / oder Drehung um eine Achse.

Weitere Angaben koennen programmiert sein, etwa die Verweildauer an einem Punkt. Es koennen auch die Flugeigenschaften, beispielsweise Beschleunigung oder Geschwindigkeit, zwischen Punkten definiert sein.

Ist ein Punkt angeflogen worden, so kann dort, und / oder auch zwischen den Punkten, der Flugkoerper Anhand der durch das Sensorsystem erfassten Informationen Objekte und / oder deren Begrenzung erfassen und im Anschluss gegenueber diesen ausgerichtet werden.

Durch die Verwendung von Routinen in Verbindung mit den erfassten Sensorinformationen kann sich der Flugkoerper zum einen dem Objekt annaehern, zum anderen auch Fehlstellungen, etwa zwischen zwei Punkten, korrigieren.

Ist das Objekt charakteristisch, beispielsweise modular, aufgebaut und besizt charakteristische geometrieen, etwa Rechte winkel oder sich wiederholende, paralllele Kanten, so koennen diese von dem Flugkoerper als Referenz genutzt werden.
Das Anfliegen von Punkten kann dadurch feinjustiert werden.

Durch die beschriebene Vorgehensweise wird das zweckmaessige Annaehern des Flugkoerpers und dessen Reinigungsapparatur gegenueber der Oberflaeche beguenstigt und Kollisionen bzw. Verkantungen mit Objekt und / oder Fehlfunktionen werden vermieden.

Eine vorteilhafte Ausgestaltung der Erfindung ist im Patentanspruch 4 angegeben. Die Weiterbildung nach Patentanspruch 4 ermöglicht es, ein Objekt entsprechend dessen Ausbreitung und / oder Abmasse abzufliegen und die Flugroute ggf. zu unterteilen. Ist das zu reinigende Objekt etwa breiter als die Reinigungsapparatur so kann die Flaeche entsprechend der Breite der Wirkflaeche der Reinigungsapparatur unterteilt werden.

Der Flugkoerper fliegt dann in mehreren, nebeneinander versetzten Bahnen die Oberflaeche des Objekts ab um die gesamte Oberflaeche zu erfassen. Dabei kann es zweckmaessig sein, dass sich errechnete Flugbahnen in der Wirkflaeche der Reinigungsapparatur ueberlappen.

Das Sensorsystem ermoeglicht es dabei, alle notwendigen Informationen, etwa die Ausmasse eines Objekts und / oder die Relativposition zu diesem, zu ermitteln, und eine effiziente da energiearme Flugroute zu errechnen.

Insgesamt kann durch das Unterteilen der Flugroute in mehrere Flugbahnen die effiziente Reinigung unterstuetzt werden.

Eine Reinigungsapparatur oder daran angebrachte Effektoren koennen beweglich gegenueber dem Flugkoerper oder in einer eingestelten Position bzw. Lage gegenueber dem Flugkoerper angeordnet sein.

Damit kann die Flugbahn zum Reinigen einer Oberflaeche entlang der Hauptausbreitung einer der Oberflaeche ausgerichtet sein ohne zu stark unterteilt zu werden.

Ein Anwendungsbeispiel ist die Verwendung des Verfahrens zur Steuerung auf einem Array, also Zusammenfassungen von Solarpanelen innerhalb eines Solarkraftwerks.

Der Flugkoerper fliegt entlang der Hauptausbreitung des Arrays und spart so u.a. zusaetzliche Lenkwege ein. Dadurch kann die Flugbahn in dessen Laenge reduziert und Energie eingespart werden.

Ist die Reinigungsapparatur tangential zur Flugrichtung ausgebreitet, so kann es vorteilhaft sein, den Flugkoerper entlang der Hauptausbreitungsrichtung der Oberflaeche zu fuehren und die Flugroute des Flugkoerpers entsprechend auszurichten.

Deckt eine Reinigungsapparatur die Oberflaeche nicht vollstaendig oder ausreichend ab, so kann es sinnvoll sein, mehrere Bahnen zu fliegen.
Vorteilhaft ist dabei die Kantendetektion des Sensorsystems,
da diese eine optimale Berechnung oder Unterteilung der Flugbahn ermoeglicht.

Eine Reinigungsapparatur kann durch eine bewegliche Anordung gegenueber dem Flugkoerper dessen Flugroute und das Verfahren zur Reinigung von Oberflaechen vereinfachen.

Ist beispielsweise eine Reinigungsapparatur nicht tangential zur Flugrichtung ausgebreitet, da etwa die Reinigungsapparatur durch dessen Beschaffenheit ein schweres Eigengewicht relativ zu der Wirkflaeche eines eingesetzten Effektors aufweist und daher verkuerzt vorkommt, so kann es vorteilhaft sein, diese in Flugrichtung ausgerichtet anzubringen.

Um die Wirkflaeche der Reinigungsapparatur auf der Oberflaeche zu vergroessern kann diese waehrend dem Flug, also fuer den Fall der Fortbewegung oder dem Fall des Innehaltens einer Position, sich tangential zur Flugroute bewegen.

Ein Anwendungsbeispiel ist das parallele Ausrichten einer Walzenbuerste in Flugrichtung am Flugkoerper. Da diese vergleichsweise schwer ist, kommt diese verkurzt vor. Durch eine getrennte Bewegung gegenueber dem Flugkoerper tangential zu dessen Flugrichtung kann jedoch eine groessere Breite beim ueberfliegen gereinigt werden ohne dass die Flugroute des Flugkoerpers staerker unterteilt werden muss.

Eine vorteilhafte Ausgestaltung der Erfindung ist im Patentanspruch 5 angegeben. Die Weiterbildung nach Patentanspruch 5 ermöglicht es, die Oberflaeche effzienter zu Reinigen, da etwa bei einer Unterbrechung einer vorgesehenen Flugroute, beispielsweise durch einen Akkuwechsel am Flugkoerper, an die letzte Position an der gereinigt wurde die Flug- bzw. Reinigungsbahn fortgesetzt werden kann und somit nicht die bereits gereinigte Oberflaeche noch einmal vollstaendig abgeflogen werden muss.

Weiterhin ist es vorteilhaft, etwaige Toleranzen in der Positionier- oder Fluggenauigkeit des Flugkoerpers beim Fortsetzen der Reinigung zu beruecksichtigen.

Dies kann beispielsweise passieren um sicher zustellen dass keine ungereinigte Flaeche um den Punkt an dem die Flug- bzw. Reinigungsbahn unterbrochen wurde, verbleibt, wobei dadurch eine bereits gereinigte Teilflaeche wiederholt abgeflogen werden kann.

Der Flugkoerper kann zum einen von einem festen Punkt relativ zum Objekt, etwa einer Ladestation, Starten und Landen. Zum Anderen kann er von unterschiedlichen Punkten relativ zum Objekt Starten und Landen.

Dies kann vorteilhaft sein, wenn beispielsweise ein Landeplatz seine Position veraendert. Ein Anwendungsbeispiel hierfuer ist ein Roboter oder Fahrzeug welches zwischen Solarpanelen verfaehrt um diese jeweils separat der Sonne nach auszurichten. Auf einem solchen Roboter zu Landen, etwa um diesen darauf aufzuladen oder den Reinigungskopf darauf automatisiert zu reinigen, bzw. von diesem zu Starten kann die Flugstrecke innerhalb derer nicht gereinigt wird, reduzieren.

Eine vorteilhafte Ausgestaltung der Erfindung ist im Patentanspruch 6 angegeben. Die Weiterbildung nach Patentanspruch 6 ermöglicht es, dass der Flugkoerper sich besonders energiearm da vorprogrammiert dem zu reinigenden Objekt oder einer definierten Start- und / oder Landeposition annaehert.

Ein Positionierungssystem, etwa GPS, kann genutzt werden, um vordefinierte Punkte auf einem ein zu reinigendes Objekt umfassenden Areal, anzufliegen. Dadurch koennen sonst erfoderliche Routinen zum Auffinden eines Objektes und ggf. zusaetzliche Elektronik vermieden und Energie eingespart werden.

Die Wegpunkte koennen zuvor ebenfalls mittels einem Positionierungssystem, etwa GPS, aufgenommen worden sein um diese spaeter vorgeben zu koennen.

Ein Ausführungsbeispiel der Erfindung ist in der Zeichnung dargestellt und wird im Folgenden näher beschrieben.

Es zeigen
- Fig. 1: eine Routine zum Starten und Anfliegen eines Wegpunktes
- Fig. 2: eine Routine zur Positionierung eines Effektors
- Fig. 3: die Seitenansicht eines Flugkoerpers ueber einem Objekt in unterschiedlichen Positonen
- Fig. 4: ein Muster dass sich aus Wegpunkten und / oder der Unterteilung von Flugbahnen ergibt

Als Ausfuehrungsbeispiel ist die Anwendung auf einem Solarkraftwerk, bestehend aus mehreren Arrays, erlaeutert.

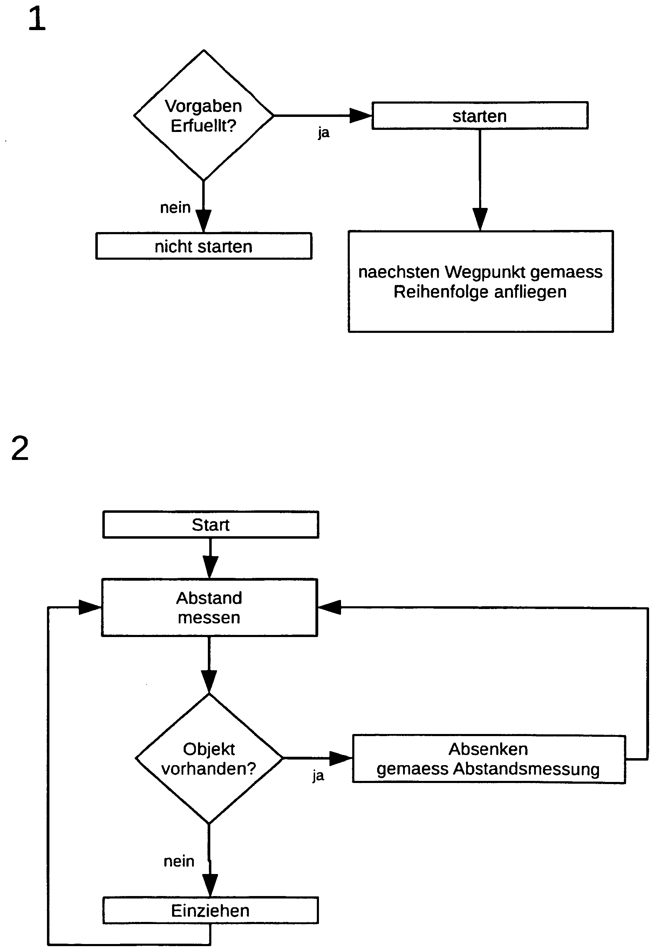

Fig. 1 zeigt, dass zunaechst abgefragt wird, ob die Vorgaben fuer einen Start erfuellt sind. Dazu wird beispielsweise die Uhrzeit abgeglichen, da nachts tendentiell schwaechere Winde auftreten und durch den Flugkoerper kein Schatten geworfen wird.

Sind die Vorgaben erfuellt, ist beispielsweise eine bestimmte Uhrzeit erreicht worden und genuegen die Umweltbedingungen dem Betrieb, so startet der Flugkoerper durch einnehmen eines definierten Wegpunktes.

Dieser ist etwa durch GPS Positionsdaten horizontal und einer Hoehenangabe vertikal definiert.

Die notwendige Ausrichtung wurde zuvor ueber einen Kompass ermittelt, welcher ebenfalls in Flugkoerpern, etwa Multikoptern oder auch Drohne genannt, vorkommt und wird ebenfalls durch die in dem Flugkoerper vorhandene Steuerelektronik eingenommen.

Weiterhin besitzt der Wegpunkt eine Nummerierung, damit dieser von Anderen unterschieden werden kann und in einer Reihenfolge angeflogen werden kann.

Eine erste Betriebsart ist im folgenden beschrieben:
Der Flugkoerper erfasst seine Umgebung anhand des Sensorsystems um den Flugkoerper oder daran angebrachte Reinigungsapparaturen gegenueber der Oberflaeche des zu reinigenden Objekts auszurichten.
Dazu ist die Reinigungsapperatur mit zwei Abstandssensoren, etwa Ultraschallsensoren, ausgestattet. Diese messen den Abstand des Flugkoerpers und dessen Reinigungsapparatur zu einem Objekt und sind zum Boden hin ausgerichtet.
Wird ein Objekt erfasst, ist also ein Grenzwert der Abstandssensoren unterschritten worden, so wird der Flugkoerper abgesenkt, sodass der Effektor der Reingiungsapparatur auf die Oberflaeche wirkt, also beispielsweise eine Leistenbuerste auf der Flaehe anliegt.
Dazu muss der Abstandssensor in einer definierten Position auf der Reinigungsapparatur angebracht sein, um die Sensorinformationen verwerten zu koennen.

Eine weitere, zweite Betriebsart ist im folgenden beschrieben und in Fig. 2 - 3 dargestellt:
Ist die Reinigungsvorrichtung (3) gegenueber dem Flugkoeprer (1) beweglich angeordnet, beispielsweise ueber einen Befestigungsadapter (2), so wird eine Hoehe fuer den Ueberflug des zu reinigenden Objekts (5) vorgegeben. Das zu reinigende Objekt ist auf dem Boden (6) angebracht.
In dieser Flughoehe koennen Ungenauigkeiten der Oberflaeche und / oder des Flugkoerpers durch die Beweglichkeit des Befestigungsadapers mechanisch ausgeglichen werden, ohne dass der Flugkoerper nachgesteuert werden muss.
Der Befestigungsadapter und damit der Reinigungskopf koennen aktiv in Ihrem Abstand zum Flugkoerper gesteuert werden. Beispielsweise kann der Reinigungskopf uber den Befestigungsadapter mit einem Antrieb eingezogen oder abgesenkt werden.

In allen Betriebsarten wird durch das Absenken der Effektor einer Reinigungsapparatur der zu reinigenden Oberflaeche angenaehert bzw. nachgefuehrt.

Ist eine solche Flaeche nicht unter dem Flugkoerper, sondern neben diesem, etwa die Glasfassade eines Hochhauses, so ist mit absenken gemeint, dass der Effektor der zu reinigenden Oberflaeche angenaehert wird.

Entsprechend bedeutet einziehen dass die Reinigungsapparatur zu dem Flugkoerper hin bewegt wird.

Fig. 2 zeigt dass der Abstand des Flugkoerpers zu einem umliegenden Objekt, etwa dem Boden oder einem zu reinigenden Objekt, nach dem Start, permanent gemessen wird.

Ist der gemessene Wert groesser als ein Schwellwert, so ist kein zu reinigendes Objekt vorhanden und die Reinigungsapparatur wird eingezogen bzw. im eingezogenen Zustand gehalten.

Ist ein zu reinigendes Objekt vorhanden, der Schwellwert zur Abstandsmessung wurde also unterschritten, so wird die Reinigungsapparatur abgesenkt.

Diese Routine kann unabhaengig von der Programmierung des Flugkoerpers, etwa in einer separaten Steuerung der Reinigungsapparatur, laufen.

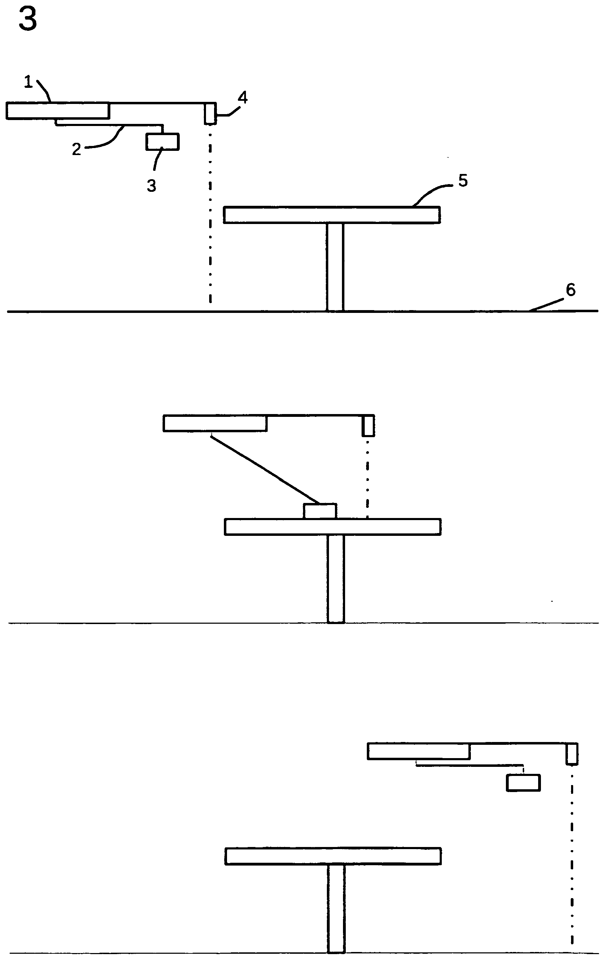

Figur 3. zeigt jeweils den Flugkoerper in Positionen vor, waehrend und nach dem Ueberfliegen eines Objektes.

Das Ansteuern der Reinigungsapparatur in Abhaengigkeit des Vorhandenseins eines Objektes vermindert das Risiko moeglicher Kollisionen des Flugkoerpers mit dessen Umwelt.

Ist eine Oberflaeche mehrfach unterteilt, etwa in einzelne Module, so kann es sinnvoll sein, die Information der Abstandsmessung mit der Information der Wegmessung zu koppeln.

Es soll dadurch vermieden werden, dass der Reinigungskopf nach jedem Modulende innerhalb eines Arrays, also einer baulichen Zusammenfassung von Solarmodulen, eingezogen werden.

Wird mit der Abstandsmessung ueber einen bestimmten Weg hinweg kein zu reinigendes Objekt festgestellt, so wird die Reinigungsapparatur eingezogen. Der dazu notwendige Schwellwert muss groesser oder gleich als der maximale Abstand zwischen zwei Modulen innerhalb eines Arrays sein.

Dadurch wird das unnoetige einziehen und absenkung der Reinigungsapparatur vermieden. Das Sensorsystem (4) misst den Abstand zu Objekten unter der Reinigungsapparatur und vor dem Flugkoerper um im Vorraus Steuerbefehle bewirken zu koennen.

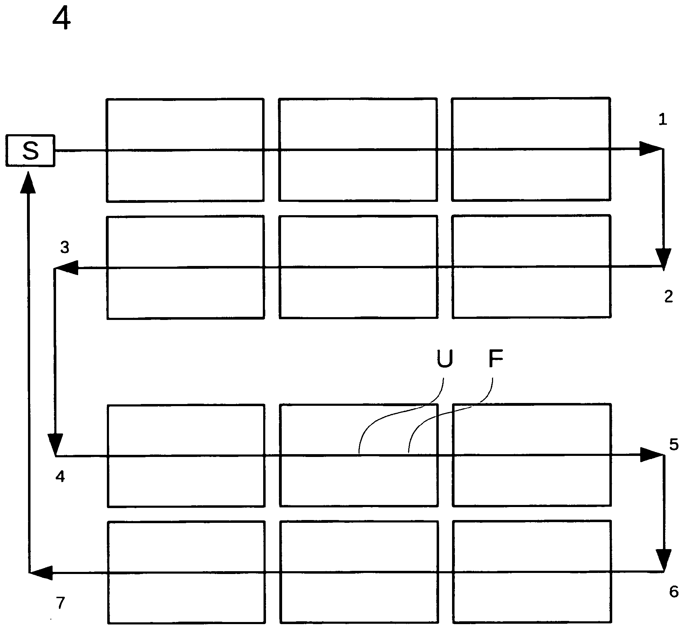

Fig. 4 zeigt eine meanderfoermige Flugroute ueber zwei Arrays. Diese wird gewaehlt, um moeglichst energiearm die gesamte Oberflaeche abzufliegen. Die Flugbahnen ergeben sich aus den priorisierten Wegpunkten, in der Zeichnung an den Pfeilenden erkennbar, und sind parallel zur Obeflaeche ausgerichtet. Der Flugkoerper startet vom Punkt S und landet dort nach vollstaendigem Ueberflug.

Muss die Flugroute unterbrochen werden, beispielsweise aufgrund einer zur Neige gehenden Kapazitaet des Akkus im Flugkoerper am Punkt U, so fliegt der Flugkoerper direkt zum Punkt S zum Auflanden und / oder zum Akkuwechel.

Die Flugroute wird vor dem Punkt der Unterbrechung U am Punkt F fortgesetzt, um moegliche Ungenauigkeiten der Posiotnierung des Flugkoerpers auszugleichen.

Die Anzahl und Anordnung der Flugbahn soll sich durch das Anfliegen der Wegpunkte so ergeben, alsdass die gesamte Breite eines Effektors an der Reinigungsapparatur auf die Oberflaeche wirkt. Die Bahnen des Effektors sollen sich dabei geringfuegig ueberlappen, um Ungenauigkeitein in der Positionierung des Flugkoerpers auszugleichen.

Beim Anfliegen der Wegpunkte ist das Sensorsystem dahingehend nuetzlich, dass es den Flugkoerper entsprechend den Kanten und Umrissen eines Objektes annaehern kann.

Sind keine oder fuer die vollstaendige Abdeckung notwendige Wegpunkte unzureichend fuer die Anwendung vorgegeben, so muss die Steuerelektronik des Sensorsystems und / oder des Flugkoerpers ausgehend von der Kantendetektion, also der Erkennung des Objekts, weitere Bahnen passend ausgerichtet und in Folge berechnen.

Dabei ist es vorteilhaft, an einer Seite der baulichen Ausbreitung des Arrays zu beginnen und geringfuegig ueberlappende Bahnen parallel dazu zu berechnen.

Positionskorrekturen sowie die Ausrichtung des Flugkoerpers koennen unabhaengig von der eingebauten Flugsteuerung, etwa eines Multikopters, anhand der Katen erfolgen da diese fuer den Flugkoerper sich wiederholende, geometische Strukturen darstellen.
So kann sich der Flugkoerper etwa parallel zu einer Kante eines Moduls ausrichten.

## Patentansprüche

1. Verfahren zur Steuerung eines Flugkoerpers zur Reinigung von Oberflaechen, umfassend,
- ein Sensorsystem zur Erfassung geometrischer Eigenschaften eines Objekts und Ausrichtung eines Flugkoerpers nach diesem, um dieses durch dessen Lufstrom zu reinigen.

2. Verfahren zur Steuerung eines Flugkoerpers nach Anspruch 1,
umfassend,
- eine Routine, innerhalb derer die Relativposition des Fugkoerpers zum Objekt erfasst wird

3. Verfahren zur Steuerung eines Flugkoerpers nach Anspruch 1 oder 2, umfassend,
- eine Routine zur Ausrichtung des Flugkoerpers in einer Reihenfolge durch welche eine unerwuenschte Kollision mit einem Objekt vermieden wird

4. Verfahren zur Steuerung eines Flugkoerpers nach einem oder mehreren der Ansprueche 1- 3, umfassend,
- eine Routine, welche Flugbahnen des Flugkoerpers derart unterteilt, dass das die Oberflaeche eines Objektes die groestmoegliche Wirkung eines Reinigungskopfes erfaehrt

5. Verfahren zur Steuerung eines Flugkoerpers nach einem oder mehreren der Ansprueche 1-4, **dadurch gekennzeichnet, dass**
- der Flugkoerper nach Unterbrechung der Flugbahn diese unter Beruecksichtgung etwaiger Toleranzen an und / oder vor dem Punkt der Unterbrechung fortsetzt

6. Verfahren zur Steuerung eines Flugkoerpers nach einem oder mehreren der Ansprueche 1 - 5, umfassend,
- ein Routine, annhand derer sich der Flugkoerper vorprogrammierten und Sensorgestuetzten Wegpunkten annaehert

## Claims

1. Method for controlling a flying body for cleaning surfaces, comprising
- a sensor system for the detection of geometrical characteristics of an object and the alignment of a flying body according to said object in order to clean it using the airflow of said flying body.

2. Method for controlling a flying body according to claim 1, comprising
- a routine, within which the position of the flying body relative to the object is sensed.

3. Method for controlling a flying body according to claim 1 or 2, comprising
- a routine for the alignment of the flying body in a sequence, due to which any undesirable collision with an object will be avoided.

4. Method for controlling a flying body according to one or more of the claims 1 -3, comprising
- a routine, which subdivides flight paths of the flying body in such a way that the surface of an object is subject to the greatest possible effect on the part of a cleaning head.

5. Method for controlling a flying body according to one or more of the claims 1 -4, **characterized in that**
- in consideration of any tolerances, after an interruption of its flight path,
the flight body will resume its flight path at or prior to the point of interruption.

6. Method for controlling a flying body according to one or more of the claims 1 - 5, comprising
- a routine, by means of which the flying body approaches pre-programmed, sensor-based waypoints.

## Revendications

1. Procédé de commande d'un corps volant de nettoyage de surfaces, comprenant
- un système de capteur pour la détection de caractéristiques géométriques d'un objet et l'alignement d'un corps volant par rapport audit objet afin de le nettoyer en utilisant le flux d'air dudit corps volant.

2. Procédé de commande d'un corps volant selon la revendication 1, comprenant
- un sous-programme, dans lequel la position du corps volant par rapport à l'objet est détectée.

3. Procédé de commande d'un corps volant selon la revendication 1 ou 2, comprenant
- un sous-programme pour l'alignement du corps volant dans une séquence, grâce à quoi toute collision indésirable avec un objet sera évitée.

4. Procédé de commande d'un corps volant selon une ou plusieurs des revendications 1 à 3, comprenant
- un sous-programme, qui subdivise des trajectoires de vol du corps volant de sorte que la surface d'un objet soit soumise au plus grand effet possible sur la partie d'une tête de nettoyage.

5. Procédé de commande d'un corps volant selon une ou plusieurs des revendications 1 à 4, **caractérisé en ce que**
- en tenant compte de toute tolérance, après une interruption de sa trajectoire de vol, le corps volant reprendra sa trajectoire de vol au niveau du point d'interruption ou bien avant celui-ci.

6. Procédé de commande d'un corps volant selon une ou plusieurs des revendications 1 à 5, comprenant
- un sous-programme, au moyen duquel le corps volant s'approche de points de cheminement préprogrammés à base de capteur.
